# EUROPEAN PATENT SPECIFICATION

(11) **EP 1 438 491 B1**
(45) Date of publication and mention of the grant of the patent: **23.07.2008**
(21) Application number: 02777450.4
(22) Date of filing: 25.10.2002
(51) Int. Cl.: F01N 3/20, F01N 3/023, F01N 3/08, F01N 3/28, F01N 3/035

(54) **GAS TREATMENT APPARATUS**
VORRICHTUNG ZUR BEHANDLUNG VON ABGASEN
APPAREIL DE TRAITEMENT GAZEUX

(30) Priority: 25.10.2001 GB 0125568
(43) Date of publication of application: 21.07.2004
(73) Proprietor: Eminox Limited, Gainsborough, Lincolnshire DN21 2TU (GB)
(72) Inventor: BALL, William Frederick, Nettleham Lincoln LN2 2QA (GB); GAULT, Anthony, John, Lincolnshire DN21 2TR (GB); HARROD, Charles, Patrick, Lincolnshire LN1 2HH (GB)
(74) Representative: McLean, Robert Andreas
(86) International application number: PCT/GB2002/004867
(87) International publication number: WO 2003/036054

(56) References cited:
- EP-A- 0 537 968
- EP-A- 0 918 146
- WO-A-00/09869
- WO-A-01/07763
- WO-A-01/12960
- WO-A-89/02978
- DE-A- 4 203 807

## Description

The present invention relates to a gas treatment apparatus for treating an exhaust gas and to a method for treating such a gas stream. The invention particularly relates to a gas treatment apparatus for treating the exhaust gas from an internal combustion engine, especially an internal combustion engine in a vehicle and extends to a vehicle equipped with such a gas treatment apparatus.

Diesel engine exhaust gases contain a number of noxious gases, such a nitrogen oxides, sulphur oxides and carbon oxides, as well as un-burnt hydrocarbons, carbon and other particles. The amount of sulphur oxides in the exhaust gases is dependent primarily upon the sulphur in the fuel and is controlled by the quality of the initial crude oil and the refining techniques used in the preparation of the fuel. However, the other materials can be treated so as to render them less obnoxious.

It is therefore common practice to pass the exhaust gases through one or more treatment chambers containing a treatment element such as a catalytic converter in which the lower nitrogen oxides are converted to NO₂. The particulates are removed from the exhaust gas stream by a metal gauze or mesh or a ceramic filter element. The NO₂ and oxygen in the gas stream react with the carbon particulates trapped in the filter element to form carbon dioxide, which is then discharged with the other exhaust gases. The filtered gases can then be subjected to reduction of remaining nitrogen oxides to nitrogen by injecting a reducing agent such as a solution of urea in water into the gas stream after it leaves the filter element but before it leaves the silencer unit. The treated gas stream is then passed over a further catalyst to convert residual ammonia from the urea to nitrogen and water, which are acceptable exhaust emissions. The net result is a typical reduction in noxious components of the exhaust gases of over 90%.

Due to space limitations for the location of such gas treatment apparatus, it is desirable to reduce their overall outer dimensions so that the designer has a greater choice in selecting where they can be mounted on or in other equipment. For the catalysts to function efficiently the reducing agent should be well mixed with the gas flow. Traditionally, the reducing agent is added via an injector nozzle having a number of radially directed outlets. This leads to imperfect distribution of the reducing agent across the gas flow.

Document WO 01/07763 describes a gas treatment apparatus for treating an exhaust gas stream and document EP 0 537 968 shows an injector having a plurality of outlets.

It is known from the WO 01/04466 A to include mixing vanes upstream of the injection of the reducing agent, in this case urea. These mixing vanes cause the gas flow to rotate or swirl rapidly in one direction around the direction of travel of the gas so that as the reducing agent is injected it is mixed with the gas flow. The introduction of mixer vanes allows the distance between the point of injection and a downstream treatment element to be reduced whilst retaining acceptable mixing thus reducing the overall size of the apparatus.

The gas flow downstream of the point of injection is still rapidly swirling as it enters a treatment element. We have found that the introduction of such a rapidly rotating flow into a treatment element can result in an increased pressure drop across the treatment element, particularly at the entry to the treatment element.

It is an object of the present invention to address some of the issues mentioned above.

Accordingly, the invention provides Gas treatment apparatus for treating an exhaust gas stream, said apparatus comprising a plurality of compartments containing treatment elements within which one or more treatments are to be performed on a gas stream passing through said compartments and through which the gas stream is to flow sequentially, including and in order:
a) a mixing region including addition means for adding a reducing agent to the gas stream, the mixing region also including turbulence inducing means to induce turbulence within the gas stream; and
b) at least one further compartment containing a treatment element for a catalytic treatment;
**characterised in that** turbulence inducing means within the mixing region comprises one or more shells in a generally concentric arrangement with the outer walls of the mixing region.

The shells within the mixing region divide the gas flow into two or more separate concentric flow paths and then permit the flows to recombine after the shell which may increase the turbulence within the gas flow.

Although the shells are described as turbulence inducing means, this may not be their only function, or even their main function. The shells may act to control gas flow through the mixing region and to control the distribution of the reducing agent within the gas flow. However, the shells will cause the gas flow to split into two or more concentric flow paths and the recombination of these flow paths will induce turbulence with the gas stream.

Although the shell may be of any length, it is preferred that the shell has a length that is a minimum of substantially 20% of the diameter of the shell and preferably substantially 30% of the diameter of the shell and most preferably about 40% of the diameter of the shell.

The term "swirl" will be used herein to describe an overall rotational component of the gas flow about an axis substantially parallel with the direction of travel of the gas. Swirl may therefore have one of two directions, clockwise or anticlockwise about said axis.

It should be noted that turbulence, which may include rotational components such as a vortex or eddy is excluded from the term 'swirl', as the rotational component is not a feature of the overall gas flow, but is a localised rotation within the gas flow. In general, turbulence in a gas flow creates randomly distributed vortices and/or eddies that when averaged over the cross section of the gas flow result in little or no overall rotational characteristic. In this case, the shells of the turbulence inducing means induce little or no swirl, but cause separation and recombination of the gas flow which promotes turbulence.

The gas treatment apparatus may be suitable for the treatment of any exhaust gas stream, for instance an industrial flue gas stream or the exhaust gas stream from a chemical process, but the invention is particularly intended for use in the treatment of an exhaust gas stream from an internal combustion engine and is of especial relevance to a vehicle having an internal combustion engine. In such vehicles space limitations are important design considerations for the location of such gas treatment apparatus.

Preferably there is a treatment element upstream of the mixing region and it is preferred that the treatment element be a treatment element for catalytic oxidation.

For convenience the invention will be described with reference to a preferred embodiment of a generally linearly arranged gas treatment apparatus for treating the exhaust gas flow from an internal combustion engine. The apparatus having a first compartment within which treatment elements are located for performing an oxidation treatment and a subsequent filtration treatment upon the gas stream. Downstream of the filtration treatment element is a mixing region including addition means for the addition of a reducing agent to the gas stream and turbulence inducing means to induce turbulence in the gas stream to encourage mixing of the gas stream and reducing agent. Downstream of the mixing region is an second compartment. Within the second compartment are located annular treatment elements for catalytic oxidation of the gas stream and the removal of any remaining reducing agent.

The catalytic treatment element within the first compartment may preferably be a Pt containing catalyst having for instance 350 - 5300g Pt per m³ of catalytic treatment element. The catalyst is preferably deposited on a ceramic or metal through flow honeycomb support. It should be understood that other catalysts may also be suitable for this application.

The filtration treatment element is preferably a ceramic wall flow filter, but may be of any other suitable type. The filtration treatment element is for removing fine particulate matter from the gas flow. Preferably the filtration treatment element can remove particles down to about one tenth of a micrometre and is located downstream of the oxidation catalyst within the central compartment.

The catalytic treatment elements located downstream of the mixing region is preferably a catalyst suitable for Selective Catalytic Reduction (SCR) to reduce nitrogen oxides within the gas stream. Preferably this catalytic treatment element includes a Copper based or Vanadium based catalyst. This catalyst will preferably be supported on a metallic or ceramic honeycomb through flow support. It should be understood that other catalysts may also be suitable for this application.

The second compartment preferably includes a treatment element downstream of the SCR treatment element for the decomposition of any remaining reducing agent to a less noxious compound. Such catalysts are generally available to those in the art. For instance if the reducing agent is a solution of urea in water, the catalytic treatment element may be suitable for converting any residual Ammonia to water and Nitrogen.

The reducing agent added to the gas stream may be any suitable reducing agent, but will preferably be ammonia, hydrazine, urea, biuret, a lower alkylamine or a mixture of these. It should be understood that the reducing agent may be added anywhere within the mixing region. Preferably the reducing agent is injected upstream of the turbulence inducing means such that as the gas flow is passed through the turbulence inducing means mixing of the gas flow and the reducing agent is encouraged. The reducing agent may be gaseous when added, but will usually be added as a liquid or solution in water or other solvent. The reducing agent preferably evaporates at the temperature of the exhaust gasses such that the reducing agent becomes gaseous, as this aids mixing.

The reducing agent may be added to the gas flow by any suitable addition means, for example, sprays, jets, or spargers etc. These addition means may be stationary or they may move and/or rotate, either driven under power or caused to do so by the passing gas flow, for instance by the addition of vanes to the addition means. Such movement may help to distribute the reducing agent more evenly within the gas flow.

Preferably the reducing agent is injected as a fine spray into the gas flow from a static injector having one or more outlets. The injector may have different outlet sizes, shapes or pressures to adjust the outlet velocity depending upon the location of the outlet, the location of the injector and the size and shape of the mixing region. The position, size and shape of outlets from the injector may also be adjusted to account for differences in the gas flow profile, for instance faster gas flow around the outside of a pipe bend.

The outlets from the static injector may be located at any point on the injector. For instance they may be located circumferentially and directed radially at a distal end of the injector, or may be distributed along the length of the injector and directed substantially perpendicular to the direction of gas flow. The injector may be of any shape suitable for the shape of the mixing region and the location of the injector. For example, an injector mounted in the side wall of a tube may extend radially inwards until a central axis of the tube is reached and may then be angled such that a distal portion of the injector is substantially aligned with said central axis. In this way radially directed injector outlets may be achieved from an injector mounted in a side wall of the mixing region.

The gas stream leaving the mixing region should contain a substantially even distribution of the reducing agent due to the induced turbulence.

The gas flow leaving the mixing region then passes into a downstream SCR catalytic treatment element and is desirably substantially evenly distributed over the upstream surface of the SCR catalytic treatment element. An even gas distribution allows the catalyst to function with substantial no loss in efficiency and therefore allows the use of a smaller catalyst. It is also preferred that the gas flow entering the SCR catalyst contains a substantially even distribution of reducing agent over the upstream surface of the SCR catalytic treatment element. If the reducing agent is not substantially evenly distributed, more reducing agent may be required to perform the required conversion, or the required conversion of NOₓ may not be met.

Droplets or films of reducing agent may form on any internal surface of the apparatus. Minimising such deposition of the reducing agent within the apparatus may facilitate the efficient transient operation of the apparatus such that the amount of reducing agent in the flow substantially corresponds to the amount added.

Injection of the reducing agent may result in maldistribution of the reducing agent within the gas flow, for example a high concentration in the centre of an injected spray and low concentration near an edge of an injected spray.

The one or more shells may substantially surround the injector outlets thereby preventing the spray injected from those outlets from reaching the outermost gas flow path. The shell may include cut out portions or apertures allowing some of the injected sprays to pass radially beyond the shell. In this way at least two flow paths each include some of the reducing agent. Some mixing will occur in each flow path prior to the gas streams being recombined at which point further mixing between the flows will occur. The turbulence caused by the mixing between the flow paths will promote even distribution of the reducing agent in the gas flow.

Using a shell to intercept the injected sprays before they reach the outside of the compartment or pipe may help to minimise the amount of reducing agent that remains as a liquid in the mixing region. The shell is within the exhaust gas flow and will therefore heat up to, and remain at, substantially the same temperature as the exhaust gases so the reducing agent will evaporate rapidly from the hot surface of the shell. The outer wall of the mixing region may be an external wall of the apparatus and in contact with the atmosphere and therefore be cooler than the exhaust temperature so the reducing agent may not evaporate as quickly, or may condense on the cooler surface, or create solid deposits that may interfere with gas flow, mixing or reducing agent injection.

Preferably a single shell is used in the mixing region as this reduces manufacturing costs and complexity and the invention will be described for convenience with reference to this preferred embodiment. If a single shell is used, it is preferred that the shell diameter is between 60% and 95%, and preferably substantially 75% of the diameter of the mixing region. At the preferred ratio the gas flow is split such that about half the gas passes outside the shell and about half inside the shell and this promotes mixing and turbulence when the gas flows recombine.

For convenience the terms leading edge and upstream edge will be used to describe the edge of the shell that the gas first contacts. The terms trailing edge and downstream edge will be used to describe the edge of the shell that the gas leaves once it has passed through or around the shell.

The shell may include turbulence inducing means such as projections or teeth on the trailing or leading edge to promote turbulence or to promote even gas flow distribution. Such turbulence inducing means may provide edges from which any liquid reducing agent deposited upon the shell may be re-entrained into the gas flow. The projections may be bent inwards or outwards, or a combination of the two to direct the gas flow in such a way so as to promote turbulent mixing. The projections may also be bent in such a way so as to redirect at least some of the gas flow in order to promote a substantially uniform gas distribution. For example, gas flow around the outside of the pipe bend may be faster and the projections can be arranged to slow the fast flow. Such an arrangement of a single shell including projections may be easy to manufacture from a single sheet of material as the projections may be cut, stamped or otherwise formed and then the sheet rolled to form the shell. The projections can be formed and/or bent before or after the shell is formed which facilitates manufacture from a tube of material. If the shell is to be formed from a tube, any projections may be laser cut and then bent, or an end may be cut and bent in a single pressing operation. It should be understood that the shells of the present invention are not limited to being formed by such methods. The projections may be shaped such that they do not distort the shell when they are bent on or out, for example they may be undercut or have only a small region by which they are attached to the shell.

The shell may include apertures permitting gas to pass through the shell. These apertures may be located anywhere on the shell and may promote turbulent mixing of the gas steams by allowing gas from at least two flow paths to mix. The apertures may include louvers or angled flaps that may promote mixing between the gas streams.

The shell may be supported in the mixing region by support struts, for example the struts may extend from the wall of the shell to the wall of the mixing region. These struts preferably hold the shell substantially centrally within the mixing region in a generally concentric arrangement.

The struts may also be used to support and centre an injector.

If the mixing region is situated in a bend in a pipe and the injector located downstream of the bend, there may be an increased risk of poor distribution of reducing agent due to the oblique gas flow exiting the bend which may blow the reducing agent towards the outside of the bend. A shell surrounding the injector may prevent the reducing agent from being significantly blown in this way as the injected reducing agent cannot pass radially beyond the shell. It is preferred that the injector outlets are located inside the shell between about 10% to 50% of the shell diameter from the leading edge and more preferably between 15% to 35%. However, these figures may depend upon the radius of curvature of the bend and the relative diameters of the shell and pipe, but these figures have been found to provide suitable protection for the injected reducing agent.

If the shell includes features such as teeth, projections or apertures, the number of these features may be selected with reference to the number of outlets from the injector. For example, if there are *n* radial outlets from the injector, it is preferred that the number of projections equals *n* or some multiple or *n*. Preferably, if the shell includes teeth at the trailing edge, there are *n* inwardly bent teeth and *n* outwardly bent teeth.

Gas treatment apparatus according to the invention may be made using any suitable techniques known to those in the art.

Although the apparatus has been described with reference to a preferred embodiment, it should be understood that the invention is equally applicable to gas treatment apparatus having a generally concentric arrangement of compartments, having compartments separated by pipes or conduits, having additional or fewer treatment elements, or having several separate compartments within which the same treatment is applied to the gas stream and downstream of which the gas flows are combined into a single compartment. The inlet and/or outlet to or from the apparatus may be axially directed rather than radially directed. Preferably the gas treatment apparatus is thermally insulated to ensure high temperatures are maintained within the apparatus. Maintaining a high temperature within the apparatus encourages the evaporation of liquids, decomposition of compounds and helps catalyst efficiency.

The invention is particularly intended for use with vehicle internal combustion engines to reduce the pollutant levels in the exhaust gas stream. Particularly for vehicles having large diesel engines such as trucks or buses.

The invention will now be further described, by way of example, with reference to the accompanying drawings, in which:
Figure 1 shows a cross section of a gas treatment apparatus according to the invention having a generally linear arrangement;
Figure 2 shows a cross section of a gas treatment apparatus according to the invention having a twin tube arrangement;
Figure 3 shows an injector suitable for use with the invention;
Figure 4 shows a further embodiment of an injector suitable for use with the invention;
Figure 5 shows an injector substantially surrounded by concentric shells to divide the gas flow;
Figure 6 shows a second embodiment of the mixing region of a gas treatment apparatus according to the invention; and
Figure 7 shows a third embodiment of the mixing region of a gas treatment apparatus according to the invention

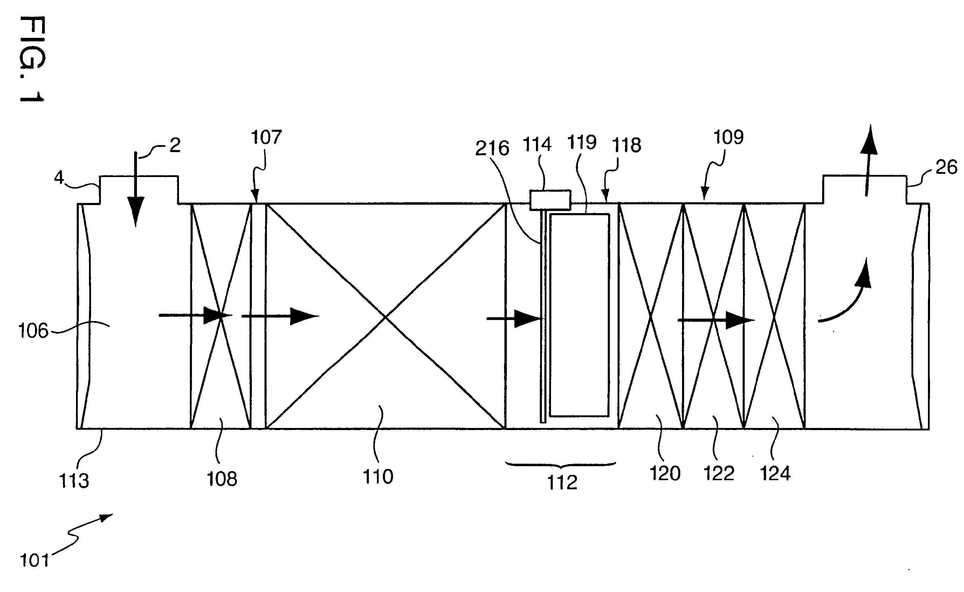

Figure 1 shows a gas treatment apparatus 101 having a generally linear arrangement. Arrows 2 show the flow path of the gas stream through the apparatus 101. The gas stream enters the apparatus 101 through a radial inlet 4 and passes into a chamber 106. In this case the gas stream is exhaust from a diesel internal combustion engine.

Gas from chamber 106 passes into a compartment 107 containing a cylindrical oxidation catalyst 108, where components within the gas stream are oxidised. In this case the oxidation catalyst is for oxidising NOₓ compounds to NO₂.

The gas then passes into a cylindrical particulate filter 110 within the compartment 107 where fine particulate material is removed from the gas flow and subsequently oxidised. In this case the filter 110 is a wall flow filter.

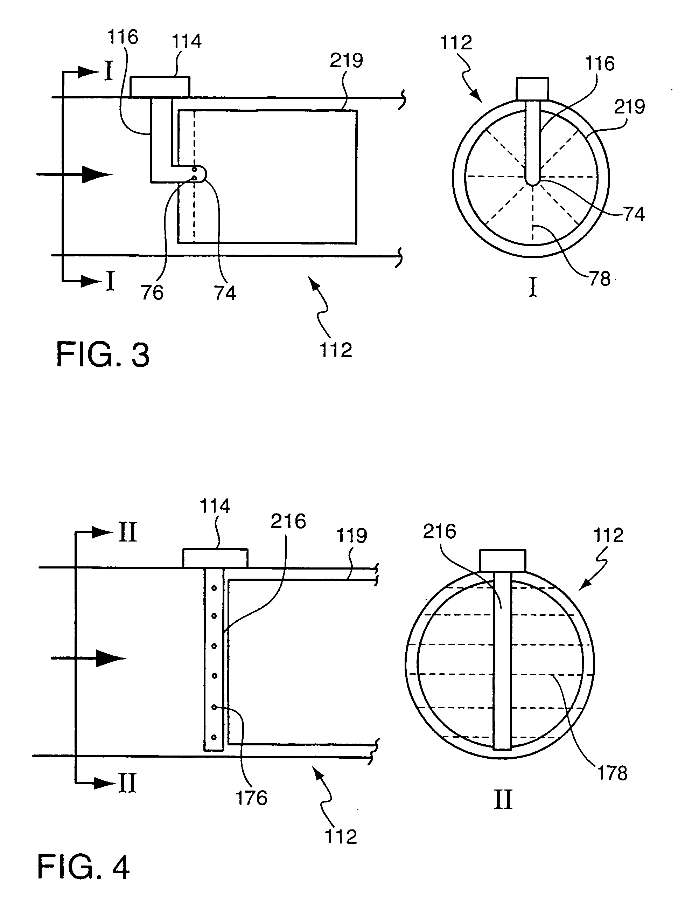

As gas leaves the filter 110, it enters a mixing region 112 within which a reducing agent, in this case urea, is mixed with the gas flow. The urea is injected through an injector 114 having a nozzle 216 with a plurality of laterally spaced outlets. Such a nozzle is shown in more detail in Figure 4.

The gas then passes through or around turbulence inducing means 118 including a shell 119. The shell 119 is shown in more detail in subsequent Figures. The turbulence inducing means 118 create turbulence in the gas stream and thereby encourage thorough mixing of the urea with the gas stream and may comprise turbulence inducing means in addition to the shell 119.

The gas then passes into a second compartment 109 containing catalytic treatment elements 120, 122, 124. In this case catalysts 120,122 are Selective Catalytic Reduction (SCR) catalysts and the final catalytic treatment element 124 is an ammonia clean up catalyst for removing residual ammonia from the gas flow.

The gas flow is then discharged from the apparatus 101 through an outlet 26. This discharge may be to the atmosphere, or to further treatment apparatus.

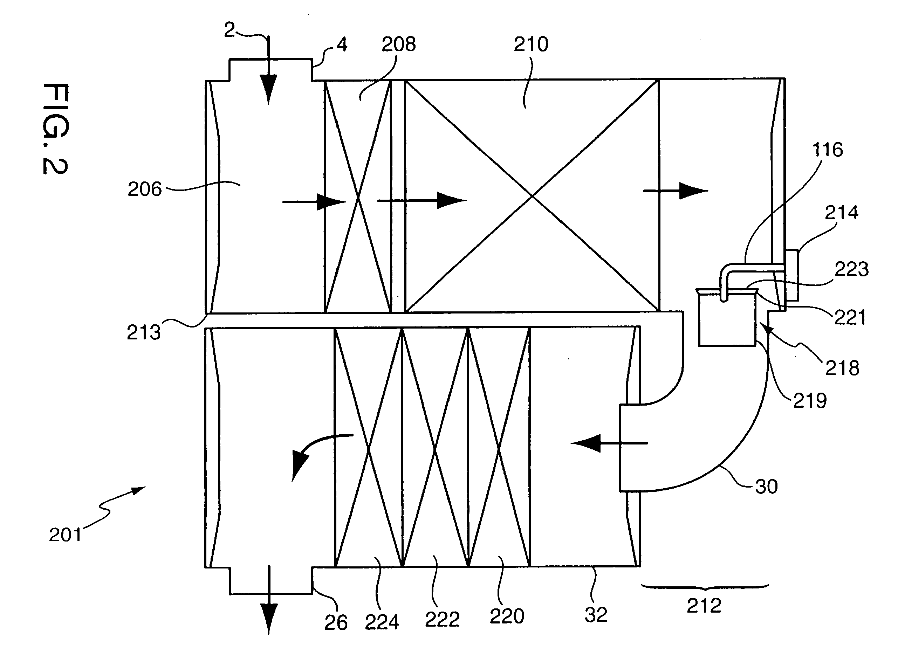

Figure 2 shows a further embodiment of gas treatment apparatus according to the invention. In this case the apparatus has a twin tube arrangement.

Arrows 2 again show the gas flow path through the apparatus 201. The gas enters through the inlet 2 and passes through the catalyst 208 and filter 210 before entering the mixing region 212.

Urea is injected into the gas stream by an injector 214 through a nozzle 116. The nozzle 116 comprises eight radially directed outlets and is shown in more detail in Figure 3.

The gas then flows through a curved pipe 30 to enter a second container 32 housing catalysts 220, 222, 224. The gas flow then exits the apparatus 201 through outlet 26.

The curved pipe 30 has a smaller diameter than the first container 213 and thus the gas flow is faster within this pipe. The turbulence inducing means 218 including a shell 219 are located in the pipe 30 as faster gas flow encourages turbulence. In this case, the shell 219 not only induces turbulence into the gas flow, but also acts to control the direction of the gas flow into which the injector 214 injects the reducing agent. The shell 219 includes a funnel section 221 at its upstream or leading edge 223 that promotes gas entry into the shell 219. It should be understood that the injection means could be located anywhere within the mixing region, for instance it could be located in the curved pipe. This layout of apparatus may be shorter than the previous layout and may therefore be more suitable for a vehicle in which the length of the gas treatment apparatus is an important design consideration.

In this embodiment the gas flow entering the pipe 30 may not be evenly distributed and the shell 219 acts to channel the gas flow in a known direction during reducing agent injection. Such a function may also be appropriate for other situations in which gas flow is not evenly distributed, for example when the entry into the shell is in a corner of the apparatus or, as in this case, in a side wall of the apparatus.

Figure 3 and 4 show injector nozzles 116,216 in a mixing region 112 (only a small section of which is shown) suitable for use with the invention and the respective cross section views I,II of the outlet sprays from the injector nozzles 116,216. Figures 3,4 also show shells 219,119 which may be suitable for use with the injector nozzles 116,216. Such injector nozzles 116,216 are particularly suitable for use in an embodiment such as 101 in Figure 1 or within the curved pipe 30 or Figure 2.

In embodiment 116, an end portion 74 of the injector nozzle 116 is orientated to be parallel with the direction of the gas flow and substantially centrally within the mixing region 112. The end portion 74 includes outlets 76 that are directed radially and distributed around the circumference of the end-portion 74. This provides radially directed outlet sprays 78. As shown in this embodiment, a shell 219 is located substantially surrounding the outlets 76 and as can be seen in Figure 3 II, the sprays 78 do not pass radially beyond the shell 219. It should be understood that the nozzle 116 may also be used when the outlets 76 of the injector are not surrounded by the shell 219.

In the embodiment of Figure 4, the injector nozzle 216 extends linearly substantially across the diameter of the mixing region 112. The injector nozzle 216 includes outlets 176 distributed along the length of the injector 216 and directed substantially perpendicular to the gas flow direction and the injector 216. These outlets 176 provide the sprays 178 distributing the injected liquid across the cross section of the mixing region 112. A shell 119 is located downstream of the nozzle 216 and, in this case the reducing agent sprays 178 are distributed across substantially the entire cross section of the mixing region 112. It should be understood that the shell 119 may substantially surround the outlets 176 if, for example, the injector nozzle 216 passed through the shell 119.

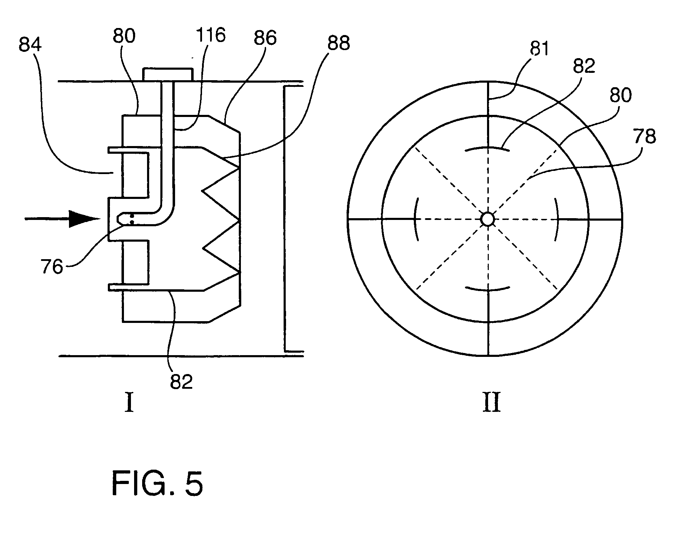

Figures 5 shows an embodiment of turbulence inducing means for use with the invention. In Figure 5, two shells 80,82 are arranged in a generally concentric arrangement within the mixing region and the shells 80,82 substantially surround the outlets 76 of the injector 116. The shells 80,82 divide the gas flow into three separate concentric flow paths around the injector 116. The shells are supported by struts 81.

The shell 82 includes cut-out portions 84 allowing some of the sprays 78 to pass by the shell 82 and reach the shell 80. In this case, no injected reducing agent reaches the outermost gas flow path from the injector 116.

As the gas flow passes out of the shells and the three flow paths are recombined the induced turbulence will mix the injected reducing agent with the exhaust gas. The shell 80 has a narrowing portion 86 to increase the gas flow velocity increasing turbulence and the shell 82 includes a serrated end portion 88 to help increase turbulence within the mixing region.

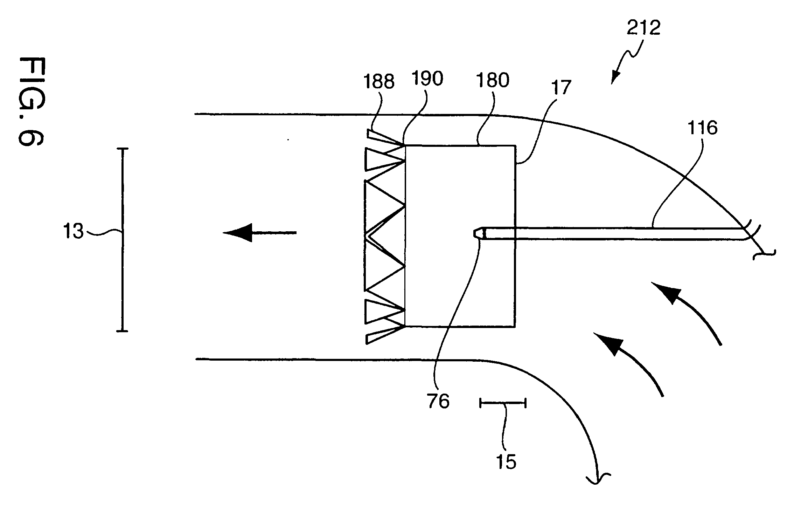

Figure 6 shows a second embodiment of a turbulence inducing means 180 suitable for use with the invention. A shell 180 substantially surrounds the injector outlets 76 and prevents the injected reducing agent from passing radially beyond the shell 180. The shell 180 includes teeth 188 at a trailing, or downstream end 190 of the shell 180. The teeth 188 are substantially triangular in shape and alternate between pointing downstream and pointing upstream. The teeth 188 also alternate between being bent radially inwards and radially outwards as this induces turbulence in the gas flowing outside the shell 180 and the gas flowing from within the shell 180. The teeth may be of any suitable shape and may be angled to the gas flow to direct at least some of the gas to flow in a circumferential direction as this may promote mixing within the gas stream.

At least part of the mixing region 212 in this case is a pipe which includes a bend. The shell 180 and injector 116 are located downstream of the bend. The bend causes the gas to enter the shell 180 at an oblique angle. The shell 180 prevents the injected reducing agent from being blown onto the outer wall of the bend and promotes good mixing of the reducing agent and gas within the shell 180 before the recombination of the two flow paths. This promotes an even distribution of reducing agent within the gas stream after only a short distance downstream of the shell 180.

The injector outlets 76 are located a distance 15 of about 20% of the diameter of the shell 180 from the leading edge of the shell 17. It should be understood that the shell 180 including the projections 188 would also be suitable for use in a straight mixing region as in Figure 1 as well as other designs of mixing regions.

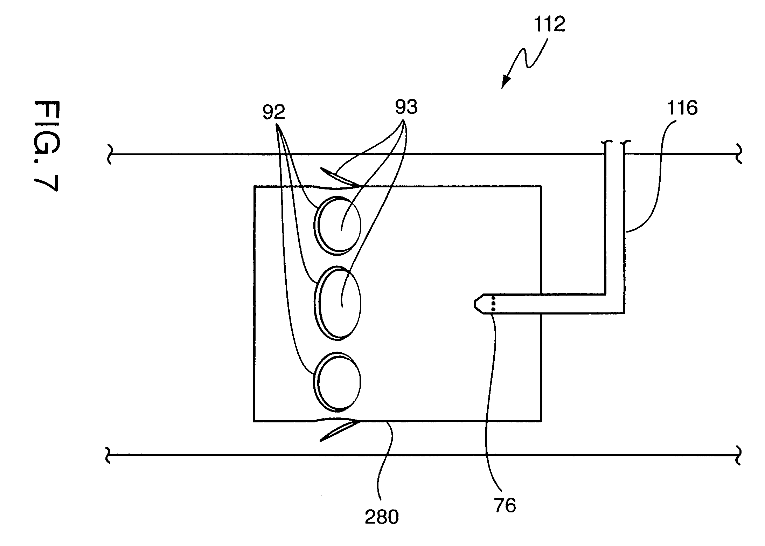

Figure 7 shows a third embodiment of turbulence inducing means 280 according to the invention. A shell 280 includes apertures 92 downstream of the outlet nozzles 67 of the injector 116. The apertures 92 allow some of the gas from the inner and outer flow paths to mix before the downstream or trailing edge of the shell 280 and this may increase the turbulence within the gas, promoting better mixing. The apertures in this embodiment include louvers 93 that may promote such mixing between the gas flows. The apertures 92 may be of any suitable shape, for instance rectangular, and the louvers 93 may also be of any suitable shape, for instance rectangular or triangular and need not be the same shape as the apertures 92.

The invention described herein aids in the efficient mixing of the reducing agent with the gas flow and thereby helps to reduce the overall size of such gas treatment apparatus. This size reduction is particularly useful where space limitations and emission controls are becoming more important, for instance on vehicles. It should be noted that although all the embodiments of shells are shown with an injector including radially directed outlets or nozzles, the embodiments may also use injectors with outlets that may be directed in any direction, for instance that shown in Figure 4.

The present invention has been described above purely by way of example. It should be noted that modifications in detail may be made within the scope of the invention as defined in the claims.

## Claims

1. Gas treatment apparatus (101, 201) for treating an exhaust gas stream, said apparatus comprising a plurality of compartments (107, 109) containing treatment elements (108, 110, 120, 122, 124, 208, 210, 220, 222, 224) within which one or more treatments are to be performed on a gas stream passing through said compartments (107, 109) and through which the gas stream is to flow sequentially, including and in order:
a) a compartment (107) containing a first treatment element (108, 110, 208, 210);
b) a mixing region (112, 212) including an injector (114, 214) for adding a reducing agent to the gas stream, the injector (114, 214) having a plurality of outlets (76, 176) through which reducing agent may be injected, the mixing region (112, 212) also including turbulence inducing means (118, 218) to induce turbulence within the gas stream; and
c) at least one further compartment (109) containing a treatment element for a catalytic treatment (120, 122, 124, 220, 222, 224);
the turbulence inducing means (118, 218) within the mixing region (112, 212) comprising at least one shell (119, 180, 219) in a generally concentric arrangement with the outer walls of the mixing region (112, 212) **characterised in that** the at least one shell (119, 180, 219) divides the gas into at least an inner and an outer gas flow in parallel and controls the radial distribution of reducing agent within the two flows, wherein the outlets (76, 176) of the injector (114, 214) are directed towards the outer gas flow.

2. A gas treatment apparatus as claimed in claim 1, in which the outlets (76, 176) of the injector (114, 214) are directed so that he reducing agent is injected in a direction substantially perpendicular to the gas flow.

3. A gas treatment apparatus as claimed in claim 1, in which the outlets (76, 176) of the injector (114, 214) are directed substantially radially.

4. A gas treatment apparatus as claimed in any preceding claim, in which the shell (119, 180, 219) intercepts at least some of the injected reducing agent before they reach the outer gas flow.

5. A gas treatment apparatus as claimed in claim 4, in which the at least one shell (119, 180, 219) prevents reducing agent injected from at least some of the outlets (76, 176) from reaching the outer gas flow includes cut out portions allowing some of the reducing agent injected from at least some of the outlets to pass radially beyond said shell. (119, 180, 219).

6. A gas treatment apparatus as claimed in any preceding claim, in which at least one hell (119, 180, 219) includes a plurality of projections (188) from a downstream edge of said shell (119, 180, 219).

7. A gas treatment apparatus as claimed in claim 6, in which at least one of the projections (188) from the downstream edge of the shell (119, 180, 219) is bent radially inwards.

8. A gas treatment apparatus as claimed in claim 6 or claim 7, in which at least one of the projections (188) from the downstream edge of the shell (119, 180, 219) is bent radially outwards.

9. A gas treatment apparatus as claimed in any preceding claim, in which there is only one shell (119, 180, 219) within the mixing region (112, 212) and the shell (119, 180, 219) has a diameter between 60% to 95% of the diameter of the mixing region (112, 212).

10. A gas treatment apparatus as claimed in any preceding claim, in which the means for adding a reducing agent to the gas stream is an injector (114, 214) having a plurality of radially directed outlets (76, 176) and the outlets (76, 176) are located within the at least one shell (119, 180, 219) between substantially 10% to 50% of the shell (119, 180, 219) diameter from an upstream edge of the shell (119, 180, 219).

11. A gas treatment apparatus as claimed in any preceding claim, in which at least one shell (119, 180, 219) includes apertures (92) through which gas may pass.

12. A gas treatment apparatus as claimed in claim 11, in which the apertures (92) include louvers (93).

13. A gas treatment apparatus as claimed in any preceding claim, in which the first treatment element (108, 110, 208, 210) is a treatment element for catalytic oxidation.

## Patentansprüche

1. Gasbehandlungsvorrichtung (101, 201) zur Behandlung eines Abgasstroms, wobei die Vorrichtung mehrere Kammern (107, 109) mit Behandlungselementen (108, 110, 120, 122, 124, 208, 210, 220, 222, 224) umfasst, in denen eine oder mehrere Behandlungen an einem durch die Kammern (107, 109) strömenden Gasstrom vorgenommen werden sollen und durch die der Gasstrom nacheinander strömen soll, wobei die Vorrichtung der Reihe nach Folgendes beinhaltet:
a) eine Kammer (107), die ein erstes Behandlungselement (108, 110, 208, 210) enthält;
b) einen Mischbereich (112, 212), der einen Injektor (114, 214) beinhaltet, um dem Gasstrom ein Reduktionsmittel zuzusetzen, wobei der Injektor (114, 214) mehrere Auslässe (76, 176) hat, durch die Reduktionsmittel eingespritzt werden kann, wobei der Mischbereich (112, 212) auch turbulenzinduzierende Mittel (118, 218) beinhaltet, um innerhalb des Gasstroms eine Turbulenz zu induzieren; und
c) mindestens eine weitere Kammer (109), die ein Behandlungselement zur katalytischen Behandlung (120, 122, 124, 220, 222, 224) enthält;
wobei die turbulenzinduzierenden Mittel (118, 218) innerhalb des Mischbereichs (112, 212) mindestens einen Mantel (119, 180, 219) in einer allgemein konzentrischen Anordnung zu den Außenwänden des Mischbereichs (112, 212) umfassen, **dadurch gekennzeichnet, dass** der mindestens eine Mantel (119, 180, 219) das Gas in mindestens einen inneren und einen äußeren Gasstrom, die parallel zueinander verlaufen, aufteilt und die radiale Verteilung des Reduktionsmittels innerhalb der beiden Ströme steuert, wobei die Auslässe (76, 176) des Injektors (114, 214) hin zum äußeren Gasstrom ausgerichtet sind.

2. Gasbehandlungsvorrichtung nach Anspruch 1, bei der die Auslässe (76, 176) des Injektors (114, 214) so ausgerichtet sind, dass das Reduktionsmittel in einer im Wesentlichen senkrecht zum Gasstrom verlaufenden Richtung eingespritzt wird.

3. Gasbehandlungsvorrichtung nach Anspruch 1, bei der die Auslässe (76, 176) des Injektors (114, 214) im Wesentlichen radial ausgerichtet sind.

4. Gasbehandlungsvorrichtung nach einem der vorstehend aufgeführten Ansprüche, bei der der Mantel (119, 180, 219) mindestens einen Teil des eingespritzten Reduktionsmittels abfängt, bevor dieses zum äußeren Gasstrom gelangt.

5. Gasbehandlungsvorrichtung nach Anspruch 4, bei der der mindestens eine Mantel (119, 180, 219), der verhindert, dass aus mindestens einigen der Auslässe (76, 176) ausgespritztes Reduktionsmittel zum äußeren Gasstrom gelangt, ausgeschnittene Abschnitte beinhaltet, die es ermöglichen, dass ein Teil des aus mindestens einigen der Auslässe (76, 176) ausgespritzten Reduktionsmittels radial über den Mantel (119, 180, 219) hinausgelangen kann.

6. Gasbehandlungsvorrichtung nach einem der vorstehend aufgeführten Ansprüche, bei der mindestens ein Mantel (119, 180, 219) mehrere Vorsprünge (188) beinhaltet, die an einer stromabwärts befindlichen Kante des Mantels (119, 180, 219) herausragen.

7. Gasbehandlungsvorrichtung nach Anspruch 6, bei der mindestens einer der aus der stromabwärts befindlichen Kante des Mantels (119, 180, 219) herausragenden Vorsprünge (188) radial nach innen gebogen ist.

8. Gasbehandlungsvorrichtung nach Anspruch 6 oder Anspruch 7, bei der mindestens einer der aus der stromabwärts befindlichen Kante des Mantels (119, 180, 219) herausragenden Vorsprünge (188) radial nach außen gebogen ist.

9. Gasbehandlungsvorrichtung nach einem der vorstehend aufgeführten Ansprüche, bei der lediglich ein Mantel (119, 180, 219) innerhalb des Mischbereichs (112, 212) vorgesehen ist und der Mantel (119, 180, 219) einen Durchmesser hat, der zwischen 60% und 95% des Durchmessers des Mischbereichs (112, 212) beträgt.

10. Gasbehandlungsvorrichtung nach einem der vorstehend aufgeführten Ansprüche, bei der es sich bei dem Mittel für das Zusetzen eines Reduktionsmittels zum Gasstrom um einen Injektor (114, 214) handelt, der mehrere radial ausgerichtete Auslässe (76, 176) hat, wobei sich die Auslässe (76, 176) innerhalb des mindestens einen Mantels (119, 180, 219), ausgehend von einer stromaufwärts befindlichen Kante des Mantels (119, 180, 219), im Wesentlichen zwischen 10% und 50% des Durchmessers des Mantels (119, 180, 219) befinden.

11. Gasbehandlungsvorrichtung nach einem der vorstehend aufgeführten Ansprüche, bei der mindestens ein Mantel (119, 180, 219) Öffnungen (92) beinhaltet, durch die Gas strömen kann.

12. Gasbehandlungsvorrichtung nach Anspruch 11, bei der die Öffnungen (92) Jalousien (93) beinhalten.

13. Gasbehandlungsvorrichtung nach einem der vorstehend aufgeführten Ansprüche, bei der es sich bei dem ersten Behandlungselement (108, 110, 208, 210) um ein Behandlungselement zur katalytischen Oxidation handelt.

## Revendications

1. Appareil de traitement du gaz (101, 201) pour le traitement d'un courant de gaz d'échappement, ledit appareil comprenant une pluralité de compartiments (107, 109) contenant des éléments de traitement (108, 110, 120, 122, 124, 208, 210, 220, 222, 224) à l'intérieur desquels un ou plusieurs traitements doivent être effectués sur un courant gazeux traversant lesdits compartiments (107, 109) et à travers lesquels le courant gazeux doit s'écouler séquentiellement, comprenant et dans l'ordre :
a) un compartiment (107) contenant un premier élément de traitement (108, 110, 208, 210) ;
b) une région de mélange (112, 212) comprenant un injecteur (114, 214) pour ajouter un agent de réduction au courant gazeux, l'injecteur (114, 214) ayant une pluralité de sorties (76, 176) à travers lesquelles l'agent de réduction peut être injecté, la région de mélange (112, 212) comprenant également des moyens d'induction de turbulence (118, 218) pour induire la turbulence à l'intérieur du courant gazeux ; et
c) au moins un autre compartiment (109) contenant un élément de traitement pour un traitement catalytique (120, 122, 124, 220, 222, 224) ;
les moyens d'induction de turbulence (118, 218) dans les limites de la région de mélange (112, 212) comprenant au moins une enveloppe (119, 180, 219) globalement agencée de façon concentrique avec les parois extérieures de la région de mélange (112, 212), **caractérisé en ce qu'**au moins une enveloppe (119, 180, 219) divise le gaz en au moins un flux gazeux intérieur et un flux gazeux extérieur en parallèle et commande la répartition radiale de l'agent de réduction à l'intérieur des deux flux, dans lequel les sorties (76, 176) de l'injecteur (114, 214) sont dirigées vers le flux gazeux extérieur.

2. Appareil de traitement gazeux tel que défini dans la revendication 1, dans lequel les sorties (76, 176) de l'injecteur (114, 214) sont dirigées de telle sorte que l'agent de réduction est injecté dans une direction sensiblement perpendiculaire au flux gazeux.

3. Appareil de traitement de gaz tel que défini dans la revendication 1, dans lequel les sorties (76, 176) de l'injecteur (114, 214) sont dirigées sensiblement de façon radiale.

4. Appareil de traitement gazeux tel que défini dans l'une quelconque des revendications précédentes, dans lequel l'enveloppe (119, 180, 219) intercepte au moins une certaine quantité de l'agent de réduction injecté avant d'atteindre le flux de gaz extérieur.

5. Appareil de traitement gazeux tel que défini dans la revendication 4, dans lequel au moins une enveloppe (119, 180, 219) empêche l'agent de réduction injecté à partir d'au moins certaines sorties (76, 176), d'atteindre le flux gazeux extérieur et comprend des portions découpées permettant à une certaine partie d'agent de réduction injecté à partir d'au moins certaines des sorties (76, 176) de passer radialement au-delà de ladite enveloppe (119, 180, 219).

6. Appareil de traitement gazeux tel que défini dans l'une quelconque des revendications précédentes, dans lequel au moins une enveloppe (119, 180, 219) comprend une pluralité de saillies (188) à partir d'un bord en aval de ladite enveloppe (119, 180, 219).

7. Appareil de traitement gazeux tel que défini dans la revendication 6, dans lequel au moins l'une des saillies (188) du bord en aval de l'enveloppe (119, 180, 219) est incurvée radialement vers l'intérieur.

8. Appareil de traitement gazeux tel que défini dans les revendications 6 ou 7, dans lequel au moins l'une des saillies (188) du bord en aval de l'enveloppe (119, 180, 219) est déformée radialement vers l'extérieur.

9. Appareil de traitement gazeux tel que défini dans l'une quelconque des revendications précédentes, dans lequel il n'est prévu qu'une seule enveloppe (119, 180, 219) dans les limites de la région de mélange (112, 212) et l'enveloppe (119, 180, 219) présente un diamètre entre 60 % et 95 % du diamètre de la zone de mélange.

10. Appareil de traitement gazeux tel que défini dans l'une quelconque des revendications précédentes, dans lequel le moyen pour ajouter un agent de réduction au courant gazeux est un injecteur (114, 214) ayant une pluralité de sorties dirigées radialement (76, 176) et les sorties (76, 176) sont situées à l'intérieur de la au moins une enveloppe (119, 180, 219), entre sensiblement 10 % à 50 % du diamètre de l'enveloppe (119, 180, 219) à partir d'un bord en amont de l'enveloppe (119, 180, 219).

11. Appareil de traitement gazeux tel que défini dans l'une quelconque des revendications précédentes, dans lequel au moins une enveloppe (119, 180, 219) comprend des ouvertures (92) à travers lesquelles le gaz peut passer.

12. Appareil de traitement gazeux tel que défini dans la revendication 11, dans lequel les ouvertures (92) comprennent des fentes (93).

13. Appareil de traitement gazeux tel que défini dans l'une quelconque des revendications précédentes, dans lequel le premier élément de traitement (108, 110, 208, 210) est un élément de traitement pour l'oxydation catalytique.
